(19) **Europäisches Patentamt / European Patent Office / Office européen des brevets**

(11) **EP 4 475 586 A1**

(12) **EUROPEAN PATENT APPLICATION**
published in accordance with Art. 153(4) EPC

(43) Date of publication:
**11.12.2024 Bulletin 2024/50**

(21) Application number: **23773937.0**

(22) Date of filing: **22.03.2023**

(51) International Patent Classification (IPC):
**H04W 24/08** (2009.01)   **G01S 11/02** (2010.01)

(52) Cooperative Patent Classification (CPC):
**G01S 11/02; H04W 24/08**

(86) International application number:
**PCT/CN2023/083175**

(87) International publication number:
**WO 2023/179690 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022   CN 202210301507**
              **24.06.2022   CN 202210727259**

(71) Applicant: **Huawei Technologies Co., Ltd.**
**Shenzhen, Guangdong 518129 (CN)**

(72) Inventors:
- **WANG, Kang**
  Shenzhen, Guangdong 518129 (CN)
- **LI, Weihua**
  Shenzhen, Guangdong 518129 (CN)
- **PENG, Shu**
  Shenzhen, Guangdong 518129 (CN)

(74) Representative: **Maiwald GmbH**
**Engineering**
**Elisenhof**
**Elisenstrasse 3**
**80335 München (DE)**

(54) **DISTANCE MEASUREMENT METHOD AND APPARATUS**

(57)   A ranging method and an apparatus are provided, to resolve a problem of excessively high power consumption of a device in a ranging procedure and reduce power consumption of the device. The method includes: A first device sends a ranging control frame to a second device by using a first resource with a lower bandwidth. The ranging control frame includes ranging parameter information. The first device and the second device perform ranging based on the ranging parameter information by using a second resource. In this way, some actions in the ranging procedure are performed by using the first resource with the lower bandwidth, to shorten time within which the second resource with a higher bandwidth is occupied. In this way, power consumption in the ranging procedure can be reduced.

FIG. 5

EP 4 475 586 A1

**Description**

This application claims priority to Chinese Patent Application No. 202210301507.5, filed with the China National Intellectual Property Administration on March 25, 2022 and entitled "MULTI-NODE RANGING METHOD BASED ON WIDEBAND-NARROWBAND INTEGRATION", and to Chinese Patent Application No. 202210727259.0, filed with the China National Intellectual Property Administration on June 24, 2022 and entitled "RANGING METHOD AND APPARATUS", which are incorporated herein by reference in their entireties.

**TECHNICAL FIELD**

This application relates to the communication field, and in particular, to a ranging method and an apparatus.

**BACKGROUND**

An ultra wideband (ultra wideband, UWB) technology has features such as a high transmission rate, a large system capacity, and a large spectrum bandwidth. The UWB technology has high temporal resolution, a strong anti-multipath capability, and high ranging accuracy thanks to the features of the UWB technology. Therefore, the UWB technology can be used to implement ranging.

For example, in a ranging procedure, a first device sends, through broadcast, a ranging parameter by using a UWB system, and a UWB system of at least one second device receives the ranging parameter. The UWB system of the first device and the UWB system of the at least one second device complete ranging between devices based on the ranging parameter. In other words, the UWB system of the device not only needs to maintain the ranging parameter, but also needs to perform ranging. Consequently, the UWB system of the device needs to perform complex tasks for a long period of time, resulting in excessively high power consumption.

**SUMMARY**

Embodiments of this application provide a ranging method and an apparatus, to resolve a problem of excessively high power consumption of a device in a ranging procedure and reduce power consumption of the device.

To achieve the foregoing purpose, the following technical solutions are used in this application.

According to a first aspect, a ranging method is provided. The ranging method includes: A first device sends a ranging control frame to a second device by using a first resource. The first device interacts with the second device based on ranging parameter information by using a second resource, to perform ranging. The ranging control frame includes the ranging parameter information, the ranging parameter information is used to perform ranging, and a bandwidth of the second resource is greater than a bandwidth of the first resource.

Based on the ranging method provided in the first aspect, the first device sends the ranging control frame to the second device by using the first resource with a lower bandwidth. The ranging control frame includes the ranging parameter information. The first device and the second device perform ranging based on the ranging parameter information by using the second resource. In this way, some actions in the ranging procedure are performed by using the first resource with the lower bandwidth, to shorten time within which the second resource with a higher bandwidth is occupied. In this way, power consumption in the ranging procedure can be reduced.

In addition, ranging is performed by using the second resource after the first device interacts with the second device based on the ranging parameter information by using the first resource, so that power consumption can be reduced without compromising ranging accuracy.

In a possible design, the ranging method provided in the first aspect may further include: The first device sends a ranging beacon frame to the second device by using the first resource, where the ranging beacon frame may be used to request to establish a personal area network. In this way, the first device requests to establish the personal area network by using the first resource with the lower bandwidth, to shorten the time within which the second resource with the higher bandwidth is occupied. In this way, power consumption of the first device can be further reduced.

In a possible design, the ranging method provided in the first aspect may further include: The first device establishes the personal area network with the second device by using the first resource. In this way, the first device and the second device establish the personal area network by using the first resource with the lower bandwidth, to shorten the time within which the second resource with the higher bandwidth is occupied. In this way, power consumption can be further reduced.

In a possible design, the ranging method provided in the first aspect may further include: The first device receives identification information from the second device by using the first resource, where the identification information may be used to identify the second device. In other words, after the first device and the second device establish the personal area network, the second device may send an identifier or an address of the second device to the first device by using the first resource, so that the first device may learn of the device included in the established personal area network.

In a possible design, when the ranging parameter information includes that the first device is a ranging initiator and the second device is a ranging responder, that the first device interacts with the second device based on ranging parameter information by using a second resource, to perform ranging may include: The first device receives a first measurement report from the second device by using the second resource. The first device obtains first distance information based on the first measurement information and second measurement information by using the second resource. The first measurement report may include first measurement information, and the first measurement information indicates a time interval between time at which the second device receives a first ranging initiation frame from the first device and time at which the second device sends a first ranging response frame to the first device. The second measurement information may indicate a time interval between time at which the first device sends the first ranging initiation frame and time at which the first device receives the first ranging response frame, and the first distance information may include a distance between the first device and the second device. In this way, when the first device is the ranging initiator, the first device can obtain the highly accurate first distance information by using the second resource.

In a possible design, the first measurement report may further include third measurement information, the third measurement information may indicate a time interval between the time at which the second device sends the first ranging response frame and time at which the second device receives a first ranging final frame from the first device, and the first ranging final frame is sent by the first device after the first device receives the first ranging response frame. In this way, an estimation error caused by clock drift can be reduced by using the first ranging final frame, to improve ranging accuracy.

In a possible design, that the first device obtains first distance information based on the first measurement information and second measurement information by using the second resource may include: The first device obtains the first distance information based on the first measurement information, the second measurement information, the third measurement information, and fourth measurement information by using the second resource, where the fourth measurement information may indicate a time interval between the time at which the first device receives the first ranging response frame and time at which the first device sends the first ranging final frame. In this way, the first device can obtain the highly accurate first distance information by using the first ranging final frame.

In a possible design, the ranging method provided in the first aspect may further include: The first device sends the first distance information to the second device by using the first resource. In other words, the first device sends a ranging result to the second device by using the first resource with lower power consumption. In this way, power consumption can be further reduced.

In a possible design, when the ranging parameter information includes that the second device is the ranging initiator and the first device is the ranging responder, that the first device interacts with the second device based on ranging parameter information by using a second resource, to perform ranging may include: The first device sends a second measurement report to the second device by using the second resource, where the second measurement report includes fifth measurement information, and the fifth measurement information may indicate a time interval between time at which the first device receives a second ranging initiation frame from the second device and time at which the first device sends a second ranging response frame to the second device.

In this way, the method provided in an embodiment of this application is applicable to a one-to-many or many-to-many scenario. In the one-to-many scenario, the first device is the ranging initiator, or the second device is the ranging initiator. In the many-to-many scenario, both the first device and the second device may be ranging initiators.

In a possible design, the second measurement report may further include seventh measurement information, and the seventh measurement information may indicate a time interval between the time at which the first device sends the second ranging response frame and time at which the first device receives a second ranging final frame from the second device. In this way, the estimation error caused by clock drift can be reduced by using the second ranging final frame, to improve ranging accuracy.

In a possible design, the ranging method provided in the first aspect may further include: The first device receives second distance information from the second device by using the first resource, where the second distance information may include the distance between the first device and the second device. In other words, the first device can receive the second distance information by using the first resource with lower power consumption. In this way, power consumption can be further reduced.

According to a second aspect, a ranging method is provided. The ranging method includes: A second device receives a ranging control frame from a first device by using a first resource. The second device interacts with the first device based on ranging parameter information by using a second resource, to perform ranging. The ranging control frame includes the ranging parameter information, the ranging parameter information is used to perform ranging, and a bandwidth of the second resource is greater than a bandwidth of the first resource.

In a possible design, the ranging method provided in the second aspect may further include: The second device receives a ranging beacon frame from the first device by using the first resource, where the ranging beacon frame may be used to request to establish a personal area network.

In a possible design, the ranging method provided in the second aspect may further include: The second device establishes the personal area network with the first device by using the first resource.

In a possible design, the ranging method provided in the second aspect may further include: In response to that the second device establishes the personal area network with the first device by using the first resource, the second device sends identification information to the first device by using the first resource, where the identification information may be used to identify the second device.

In a possible design, when the ranging parameter information includes that the first device is a ranging initiator and the second device is a ranging responder, that the second device interacts with the first device based on ranging parameter information by using a second resource, to perform ranging may include: The second device sends a first measurement report to the first device by using the second resource, where the first measurement report may include first measurement information, and the first measurement information may indicate a time interval between time at which the second device receives a first ranging initiation frame from the first device and time at which the second device sends a first ranging response frame to the first device.

In a possible design, the first measurement report may further include third measurement information, the third measurement information may indicate a time interval between the time at which the second device sends the first ranging response frame and time at which the second device receives a first ranging final frame from the first device.

In a possible design, the ranging method provided in the second aspect may further include: The second device receives first distance information from the first device by using the first resource, where the first distance information may include a distance between the first device and the second device.

In a possible design, when the ranging parameter information includes that the second device is the ranging initiator and the first device is the ranging responder, that the second device interacts with the first device based on ranging parameter information by using a second resource, to perform ranging may further include: The second device receives a second measurement report from the first device by using the second resource. The second device obtains second distance information based on fifth measurement information and sixth measurement information by using the second resource. The second measurement report includes the fifth measurement information, and the fifth measurement information indicates a time interval between time at which the first device receives a second ranging initiation frame from the second device and time at which the first device sends a second ranging response frame to the second device. The sixth measurement information indicates a time interval between time at which the second device sends the second ranging initiation frame and time at which the second device receives the second ranging response frame, and the second distance information includes the distance between the first device and the second device.

In a possible design, the second measurement report may further include seventh measurement information, and the seventh measurement information may indicate a time interval between the time at which the first device sends the second ranging response frame and time at which the first device receives a second ranging final frame from the second device.

In a possible design, that the second device obtains second distance information based on fifth measurement information and sixth measurement information by using the second resource may include: The second device obtains the second distance information based on the fifth measurement information, the sixth measurement information, the seventh measurement information, and eighth measurement information by using the second resource, where the eighth measurement information may indicate a time interval between the time at which the second device receives the second ranging response frame and time at which the second device sends the second ranging final frame.

In a possible design, the ranging method provided in the second aspect may further include: The second device sends the second distance information to the first device by using the first resource.

In addition, for technical effects of the ranging method according to the second aspect, refer to the technical effects of the ranging method according to the first aspect. Details are not described herein again.

According to a third aspect, a communication apparatus is provided. The communication apparatus includes a first communication module and a second communication module. The first communication module is configured to wake up the second communication module.

The first communication module is configured to perform, by using a first resource, the method performed by using the first resource according to any possible implementation of the first aspect and the second aspect.

The second communication module is configured to perform, by using a second resource, the method performed by using the second resource according to any possible implementation of the first aspect and the second aspect, where a bandwidth of the first resource is less than a bandwidth of the second resource.

It should be noted that a first communication module 201 and a second communication module 202 may be separately disposed, or may be integrated into one module. This is not limited in this application, provided that a corresponding function can be implemented.

Optionally, the communication apparatus according to the third aspect may further include a storage module and/or a transceiver module. The storage module stores a computer program or instructions When the first communication module and/or the second communication module execute/executes the program or the instructions, the communication apparatus according to the third aspect is enabled to perform the ranging methods according to the first aspect and the second aspect.

Optionally, the transceiver module may be configured to communicate with, by the communication apparatus, another device or communication apparatus. The transceiver module may be integrated with the first communication module and/or the second communication module, or may exist independently.

Optionally, the transceiver module may include a receiving module and a sending module. The receiving module is configured to receive data and/or signaling from another device, and the sending module is configured to send data and/or signaling to the another device. A specific implementation of the transceiver module is not specifically limited in this application.

It should be noted that the communication apparatus according to the third aspect may be a first device or a second device, or may be a chip or a chip system disposed in the first device or in the second device. This is not limited in this application.

In addition, for technical effects of the communication apparatus according to the third aspect, refer to the technical effects of the ranging method according to the first aspect. Details are not described herein again.

According to a fourth aspect, a communication apparatus is provided. The communication apparatus includes a processor. The processor is coupled to a memory, and the memory is configured to store a computer program.

The processor is configured to execute the computer program stored in the memory, so that the method according to any possible implementation of the first aspect and the second aspect is performed.

In a possible design, the communication apparatus according to the fourth aspect may further include a transceiver. The transceiver may be a transceiver circuit or an input/output port. The transceiver may be configured to communicate with, by the communication apparatus, with another device.

It should be noted that the input port may be configured to implement receiving functions in the first aspect and the second aspect, and the output port may be configured to implement sending functions in the first aspect and the second aspect.

In this application, the communication apparatus according to the fourth aspect may be a first device or a second device, or may be a chip or a chip system disposed in the first device or in the second device.

In addition, for technical effects of the communication apparatus according to the fourth aspect, refer to the technical effects of the method according to any possible implementation of the first aspect. Details are not described herein again.

According to a fifth aspect, a communication system is provided. The communication system includes a first device and a second device. There may be one or more first devices, and there may be one or more second devices. The first device is configured to implement the method according to the first aspect. The first device is configured to implement the method according to the second aspect.

Alternatively, the communication system includes the communication apparatus (the communication apparatus is the first device) that is described in the third aspect and that is configured to implement the method according to the first aspect, and the communication apparatus (the communication apparatus is the second device) that is described in the third aspect and that is configured to implement the method according to the second aspect.

According to a sixth aspect, a chip system is provided. The chip system includes a logic circuit and an input/output port. The logic circuit is configured to implement processing functions in the first aspect and the second aspect, and the input/output port is configured to implement receiving and sending functions in the first aspect and the second aspect. Specifically, the input port may be configured to implement the receiving functions in the first aspect and the second aspect, and the output port may be configured to implement the sending functions in the first aspect and the second aspect.

In a possible design, the chip system further includes a memory, and the memory is configured to store program instructions and data for implementing the functions in the first aspect and the second aspect.

The chip system may include a chip, or may include a chip and another discrete component.

According to a seventh aspect, a computer-readable storage medium is provided. The computer-readable storage medium stores a computer program or instructions. When the computer program or the instructions are run on a computer, the method according to any possible implementation of the first aspect and the second aspect is performed.

According to an eighth aspect, a computer program product is provided. The computer program product includes a computer program or instructions. When the computer program or the instructions are run on a computer, the method according to any possible implementation of the first aspect and the second aspect is performed.

**BRIEF DESCRIPTION OF DRAWINGS**

FIG. 1 is a diagram of an architecture of a communication system according to an embodiment of this application;
FIG. 2 is a diagram of a structure of a communication apparatus according to an embodiment of this application;
FIG. 3 is a diagram of a structure of another communication apparatus according to an embodiment of this application;
FIG. 4 is a diagram of a ranging procedure according to an embodiment of this application;

FIG. 5 is a schematic flowchart of a ranging method according to an embodiment of this application;
FIG. 6 is a schematic flowchart of another ranging method according to an embodiment of this application;
FIG. 7 is a diagram of another ranging procedure according to an embodiment of this application;
FIG. 8 is a schematic flowchart of still another ranging method according to an embodiment of this application;
FIG. 9 is an application diagram of a ranging method according to an embodiment of this application; and
FIG. 10 is an application diagram of a ranging method according to an embodiment of this application.

## DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

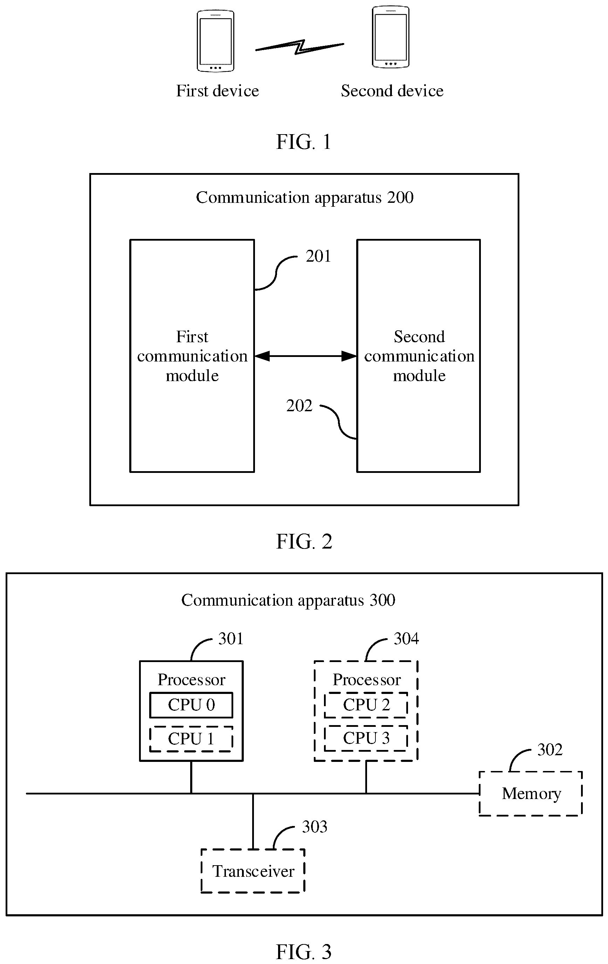

FIG. 1 is a diagram of an architecture of a communication system to which a ranging method is applicable according to an embodiment of this application. For ease of understanding embodiments of this application, a communication system shown in FIG. 1 is first used as an example to describe in detail a communication system applicable to embodiments of this application. It should be noted that the solutions in embodiments of this application may be further applied to another mobile communication system, and a corresponding name may alternatively be replaced with a name of a corresponding function in another mobile communication system.

As shown in FIG. 1, the communication system includes a first device and a second device. There may be one or more first devices, and there may be one or more second devices.

The first device or the second device may be a terminal having a ranging or positioning function, or a chip or a chip system that may be disposed in the terminal. The first device or the second device may also be referred to as user equipment (user equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the first device or the second device in embodiments of this application may be a mobile phone (mobile phone), a wireless data card, a personal digital assistant (personal digital assistant, PDA) computer, a laptop computer (laptop computer), a tablet computer (Pad), an unmanned aerial vehicle, a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness products) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the first device or the second device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method provided in this application by using the vehicle-mounted module, the vehicle-mounted assembly, the vehicle-mounted component, the vehicle-mounted chip, or the vehicle-mounted unit that is built in the vehicle.

It should be noted that a ranging method provided in embodiments of this application is applicable to various ranging or positioning scenarios. It should be understood that the scenario described in embodiments of this application is intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It should be understood that FIG. 1 is merely a simplified diagram of an example for ease of understanding. The communication system may further include another network device not drawn in FIG. 1.

Optionally, this application provides a communication apparatus configured to perform ranging methods provided in following embodiments of this application. The communication apparatus is configured to implement the following methods. It may be understood that to implement the following functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the following method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 2 is a diagram of a structure of a communication apparatus according to an embodiment of this application. The communication apparatus 200 may be a first device or a second device, or may be a chip applicable to the first device or the second device, or may be another component having a ranging function.

As shown in FIG. 2, the communication apparatus 200 includes a first communication module 201 and a second communication module 202.

The first communication module 201 may wake up the second communication module 202.

The first communication module 201 is configured to perform, by using a first resource, a related function performed by using the first resource in a ranging method provided in a following embodiment of this application. For details, refer to the following method embodiment. Details are not described herein again.

The second communication module 202 is configured to perform, by using a second resource, a related function performed by using the second resource in a ranging method provided in the following embodiment of this application. For details, refer to the following method embodiment. Details are not described herein again.

For example, a bandwidth of the first resource is less than a bandwidth of the second resource.

For example, the first communication module 201 may be referred to as a narrowband module, a narrowband system, or the like, and the second communication module 202 may be referred to as a wideband module, a wideband system, a UWB module, a UWB system, or the like. This is not specifically limited in this application.

For example, the first communication module 201 may include but is not limited to: a Bluetooth low energy (Bluetooth low energy, BLE) module, a wireless fidelity (wireless fidelity, Wi-Fi) module, a near field communication (near field communication, NFC) module, and/or a Greentooth low energy (Greentooth low energy, GLE) module.

For example, the second communication module 202 may include but is not limited to a UWB module.

It should be noted that the first communication module 201 and the second communication module 202 may be separately disposed, or may be integrated into one module. This is not limited in this application, provided that a corresponding function can be implemented.

Optionally, the communication apparatus 200 may further include a storage module and/or a transceiver module (not shown in FIG. 2). The first communication module 201 and the second communication module 202 may be coupled to the storage module and/or the transceiver module. The transceiver module may be integrated with the first communication module 201 and/or the second communication module 202, or may exist independently.

The storage module is configured to store a computer program for executing the solution of this application, and the first communication module 201 and the second communication module 202 control execution of the computer program.

The transceiver module is configured to communicate with another communication apparatus. For example, the communication apparatus 200 is the first device, and the transceiver module may be configured to communicate with the second device. For another example, the communication apparatus 200 is the second device, and the transceiver module may be configured to communicate with the first device. In addition, the transceiver module may include a receiving module and a sending module (not shown in FIG. 2). The receiving module is configured to implement a receiving function, and the sending module is configured to implement a sending function.

It should be noted that a structure of the communication apparatus 200 shown in FIG. 2 does not constitute a limitation on the communication apparatus. An actual communication apparatus may include more or fewer components than those shown in the figure, combine some components, or have different component arrangements.

FIG. 3 is a diagram of a structure of another communication apparatus 300 that may be configured to perform a ranging method provided in an embodiment of this application. The communication apparatus 300 may be a first device or a second device, or may be a chip applicable to the first device or the second device, or may be another component having a ranging function. As shown in FIG. 3, the communication apparatus 300 includes a processor 301. Optionally, the communication apparatus 300 may further include a memory 302 and/or a transceiver 303. The processor 301 is coupled to the memory 302 and the transceiver 303. For example, the processor 301 may be connected to the memory 302 and the transceiver 303 through a communication bus.

The following describes each composition component of the communication apparatus 300 in detail with reference to FIG. 3.

The processor 301 is a control center of the communication apparatus 300, and may be one processor or may be a collective term of a plurality of processing elements. For example, the processor 301 may be one or more central processing units (central processing unit, CPU), or an application-specific integrated circuit (application-specific integrated circuit, ASIC), or may be configured as one or more integrated circuits implementing embodiments of this application, for example, one or more microprocessors (digital signal processor, DSP) or one or more field programmable gate arrays (field programmable gate array, FPGA).

The processor 301 may perform various functions of the communication apparatus 300 by running or executing a software program stored in the memory 302 and invoking data stored in the memory 302.

During specific implementation, in an embodiment, the processor 301 may include one or more CPUs, for example, a CPU 0 and a CPU 1 shown in FIG. 3.

During specific implementation, in an embodiment, the communication apparatus 300 may alternatively include a plurality of processors, for example, the processor 301 and a processor 304 shown in FIG. 3. Each of the processors may be a single-core processor (single-CPU) or may be a multi-core processor (multi-CPU). The processor herein may be one or more communication devices, circuits, and/or processing cores configured to process data (for example, computer program instructions).

The memory 302 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can be used for carrying or storing expected program code in a form of an instruction or a data structure and that can be accessed by a computer. However, the memory 302 is not limited thereto. The memory 302 may be integrated with the processor 301, or may exist independently, and is coupled to the processor 301 through an input/output port (not shown in FIG. 3) of the communication apparatus 300. This is not specifically limited in embodiments of this application.

The memory 302 is configured to store a software program for performing the solution of this application, and the processor 301 controls execution of the software program. For the specific implementation, refer to the following method embodiment. Details are not described herein again.

The transceiver 303 is configured to communicate with another communication apparatus. For example, the communication apparatus 300 is the first device, and the transceiver 303 may be configured to communicate with the second device. For another example, the communication apparatus 300 is the second device, and the transceiver 303 may be configured to communicate with the first device. In addition, the transceiver 303 may include a receiver and a transmitter (which are not separately shown in FIG. 3). The receiver is configured to implement a receiving function, and the transmitter is configured to implement a sending function. The transceiver 303 may be integrated with the processor 301, or may exist independently, and is coupled to the processor 301 through an input/output port (not shown in FIG. 3) of the communication apparatus 300. This is not specifically limited in embodiments of this application.

It should be noted that a structure of the communication apparatus 300 shown in FIG. 3 does not constitute a limitation on the communication apparatus. An actual communication apparatus may include more or fewer components than those shown in the figure, combine some components, or have different component arrangements.

For ease of understanding, the following briefly describes technical terms and related technologies in this application.

1. Ranging parameter information

For example, the ranging parameter information may be used to perform ranging.

Optionally, the ranging parameter information may include but is not limited to one or more of the following: ranging role information, ranging moment information, and ranging duration information.

Optionally, the ranging role information may indicate a ranging role of a device in a ranging procedure.

For example, the ranging role in the ranging procedure may include a ranging initiator and a ranging responder.

For example, the ranging initiator may initiate a ranging request, for example, send a ranging initiation frame, and the ranging responder may receive the ranging request. The ranging responder may send a ranging response frame, and the ranging requester may receive the ranging response frame.

In some embodiments, there may be one or more ranging initiators, and there may be one or more ranging responders.

For example, it is assumed that a communication system includes a first device and a second device. The ranging role information may indicate that the first device is the ranging initiator, and correspondingly, the second device is the ranging responder. The ranging role information may alternatively indicate that the second device is the ranging initiator, and correspondingly, the first device is the ranging responder. Alternatively, the ranging role information may indicate that ranging initiators include the first device and the second device, and ranging responders include the first device and the second device. In this way, both the first device and the second device may initiate ranging.

Optionally, the ranging moment information may indicate a moment at which the device performs ranging.

For example, the ranging moment information may indicate moments at which each device in the communication system sends a ranging initiation frame, a ranging response frame, a ranging final frame, and/or a ranging report.

Optionally, the ranging duration information may indicate duration within which the device performs ranging.

For example, the ranging duration information may indicate total duration of a ranging phase, or may indicate duration of each sub-phase in the ranging phase.

2. One-way ranging (one-way ranging, OWR), single-sided two-way ranging (single side two way ranging, SS-TWR), and double-sided two-way ranging (double side two way ranging, DS-TWR)

Ranging manners to which the method provided in this application is applicable may include an OWR manner, an SS-TWR manner, and a DS-TWR manner.

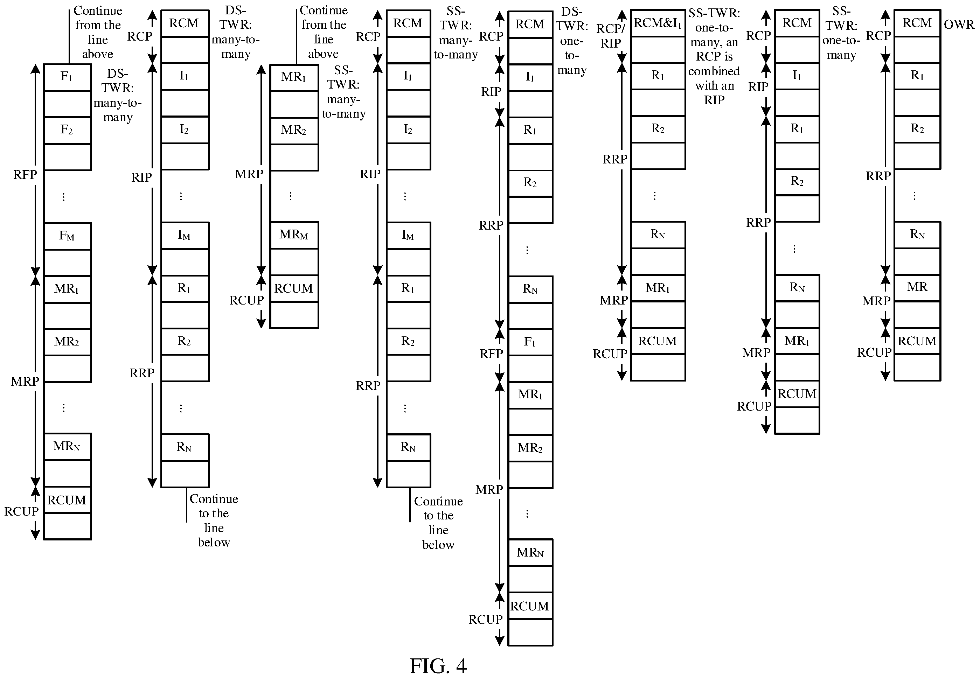

FIG. 4 is a diagram of a ranging procedure according to an embodiment of this application.

Refer to FIG. 4. The OWR manner may include a ranging control phase (ranging control phase, RCP), a ranging response phase (ranging response phase, RRP), a measurement report phase (measurement report phase, MRP), and a ranging control update phase (ranging control update phase, RCUP).

Optionally, the OWR manner is applicable to a time difference of arrival (time difference of arrival, TDOA) system.

Refer to FIG. 4. Both the SS-TWR manner and the DS-TWR manner may be classified into two scenarios: one-to-many and many-to-many. In the one-to-many scenario, only one device initiates a ranging request, and there is only one ranging initiator. In the many-to-many scenario, at least two devices initiate ranging requests, and there may be a plurality of ranging initiators.

The SS-TWR manner may include the RCP phase, a ranging initiation phase (ranging initiation phase, RIP), the RRP phase, the MRP phase, and the RCUP phase. The RCP phase may be combined with the RIP. For example, a ranging controller sends a ranging control frame and a ranging initiation frame at the same time.

The DS-TWR manner may include the RCP phase, the RIP phase, the RRP phase, a ranging final phase (ranging final phase, RFP) phase, the MRP phase, and the RCUP phase.

The following briefly describes each phase of the ranging manner.

In the RCP phase, the ranging controller may send the ranging control frame, for example, a ranging control message (ranging control message, RCM). The ranging control frame may include ranging parameter information. The ranging controller may be a device that generates and sends the ranging control frame, and a device that receives the ranging control frame may be a ranging controlled party. Optionally, a blank box in FIG. 4 may represent an idle time interval.

Optionally, the ranging parameter information may include ranging role information, ranging moment information, and/or ranging duration information.

For example, for the OWR manner, the ranging role information may include that a device 1 is a ranging initiator, and a device 2 to a device N+1 are ranging responders. For the SS-TWR manner and the DS-TWR manner, in the one-to-many scenario, the ranging role information may include that the device 1 is a ranging initiator, and the device 2 to the device N+1 are ranging responders. In the many-to-many scenario, the ranging role information may include that M devices (for example, the device 1 to a device M) are ranging initiators, and N devices (for example, the device 1 to a device N) are ranging responders.

Values of N and M are not limited in this application. It is assumed that a system includes N+1 devices. In this case, M is an integer less than or equal to N+1, and N is an integer greater than or equal to 1.

It should be noted that after ranging roles are allocated, a device that sends the ranging control frame may be the ranging initiator or the ranging responder.

Refer to FIG. 4. For the OWR manner, the ranging moment information may indicate corresponding moments (that is, moments corresponding to $R_1$ to $R_N$) at which the N ranging responders send respectively ranging response frames, and may indicate a corresponding moment (that is, a moment corresponding to an MR) at which the ranging responder sends a ranging report.

Refer to FIG. 4. For the SS-TWR manner and the DS-TWR manner, the ranging moment information may indicate a corresponding moment/corresponding moments (that is, a moment corresponding to $I_1$, or moments corresponding to $I_1$ to $I_M$) at which the ranging initiator/ranging initiators sends/send the ranging initiation frame/ranging initiation frames respectively, may indicate corresponding moments (that is, moments corresponding to $R_1$ to $R_N$) at which ranging responders send ranging response frames respectively, and may indicate a corresponding moment/corresponding moments (that is, a moment corresponding to $MR_1$, or moments corresponding to $MR_1$ to $MR_M$) at which the ranging initiator/ranging initiators or the ranging responders sends/send a ranging report/ranging reports. For the DS-TWR manner, the ranging moment information may further indicate a moment/moments (that is, a moment corresponding to $F_1$, or moments corresponding to $F_1$ to $F_M$) at which the ranging initiator/ranging initiators sends/send the ranging final frame/ranging final frames.

It should be noted that for the SS-TWR manner and the DS-TWR manner, the ranging report is sent by the ranging initiator to the ranging responder, or the ranging report is sent by the ranging responder to the ranging initiator. This is not limited.

Refer to FIG. 4. The ranging duration information may indicate total duration of the ranging phase corresponding to the OWR manner, the SS-TWR manner, or the DS-TWR manner. The ranging duration information may further indicate duration of each sub-phase in the ranging phase.

For example, for the OWR manner, the ranging duration information may indicate total duration from the RCP phase to the RCUP phase. The ranging duration information may further indicate duration of the RCP phase, duration of the RRP phase, duration of the MRP phase, and/or duration of the RCUP phase.

In the RIP phase of the SS-TWR manner and the DS-TWR manner, the ranging initiator/ranging initiators sends/send respectively the ranging initiation frame/ranging initiation frames to the ranging responders at the comment corresponding to $I_1$ or at the moments corresponding to $I_1$ to $I_N$. The ranging initiation frame may include a timestamp corresponding to sending of the ranging initiation frame. After receiving the ranging initiation frame, the ranging responder adds, to the ranging initiation frame, a timestamp corresponding to receiving of the ranging initiation frame.

In the RRP phase of the OWR manner, N ranging controlled parties send respectively the ranging response frames to the ranging controller at the moments corresponding to $R_1$ to $R_N$. The ranging response frame may include a timestamp corresponding to sending of the ranging response frame. After receiving the ranging initiation frame, the ranging controller adds, to the ranging initiation frame, a timestamp corresponding to receiving of the ranging initiation frame.

In the RRP phase of the SS-TWR manner and the DS-TWR manner, the ranging responders send respectively the ranging response frames to the ranging initiator/ranging initiators at the moment corresponding to $R_1$ or at the moments corresponding to $R_1$ to $R_N$. The ranging response frame may include a timestamp corresponding to sending of the ranging response frame. After receiving the ranging response frame, the ranging initiator adds, to the ranging response frame, a timestamp corresponding to receiving of the ranging response frame.

In the MRP phase of the OWR manner, the ranging controller may send the measurement report to the ranging controlled party at the moment corresponding to the MR.

In the MRP phase of the SS-TWR manner and the DS-TWR manner, the ranging initiator/ranging initiators sends/send respectively the measurement reports to the ranging responders at the moment corresponding to $MR_1$ or at the moments corresponding to $MR_1$ to $MR_M$. Alternatively, the ranging responders send respectively the measurement reports to the ranging initiator/ranging initiators at the moment corresponding to $MR_1$ or at moments corresponding to $MR_1$ to $MR_N$.

Optionally, in the MRP phase, a measurement result, for example, first distance information or second distance information described in the following method embodiments, may be further transmitted between the ranging controller and the ranging controlled party.

In the RFP phase of the DS-TWR manner, the ranging initiator/ranging initiators sends/send respectively the ranging final frame/ranging final frames to the ranging responders at the moment corresponding to $F_1$ or at the moments corresponding to $F_1$ to $F_M$. The ranging final frame may include a timestamp corresponding to sending of the ranging final frame. After receiving the ranging final frame, the ranging responder adds, to the ranging final frame, a timestamp corresponding to receiving of the ranging final frame. The DS-TWR manner including the RFP phase can reduce an estimation error caused by clock drift.

In the RCUP phase of the OWR manner, if there is an update for the ranging control message, the ranging control message may be updated. For example, the ranging controller may send a ranging control update message (ranging control update message, RCM).

A first device sends, through broadcast, the ranging parameter by using a UWB system, and a UWB system of at least one second device receives the ranging parameter. The UWB system of the first device and the UWB system of the at least one second device perform, based on the ranging parameter, the RIP phase, the RRP phase, the RFP phase, the MRP phase, and corresponding functions to perform ranging, and then perform the RCUP phase to update the ranging control message.

It can be learned that the entire ranging procedure is executed by the UWB systems of the devices. However, the UWB technology features a high transmission rate, a large system capacity, and a large spectrum bandwidth. If the UWB system of the device is used to execute a complex task for a long period of time, power consumption of the device is excessively high.

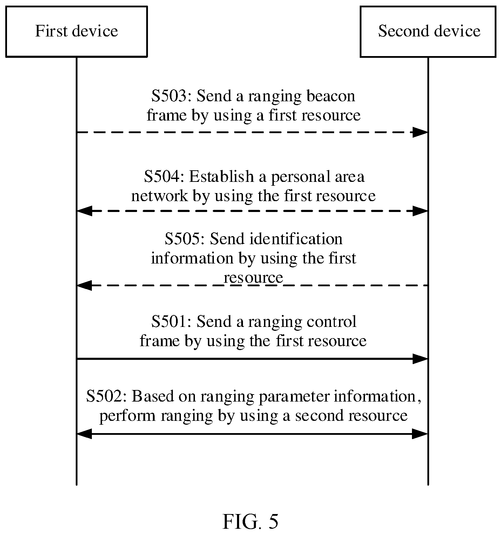

The following describes in detail a ranging method provided in embodiments of this application with reference to FIG. 5 to FIG. 10.

FIG. 5 is a schematic flowchart of a ranging method according to an embodiment of this application. The method shown in FIG. 5 is described by using an example in which a first device sends a ranging control frame.

As shown in FIG. 5, the ranging method includes the following steps.

S501: The first device sends the ranging control frame to a second device by using a first resource. Correspondingly, the second device receives the ranging control frame from the first device by using the first resource.

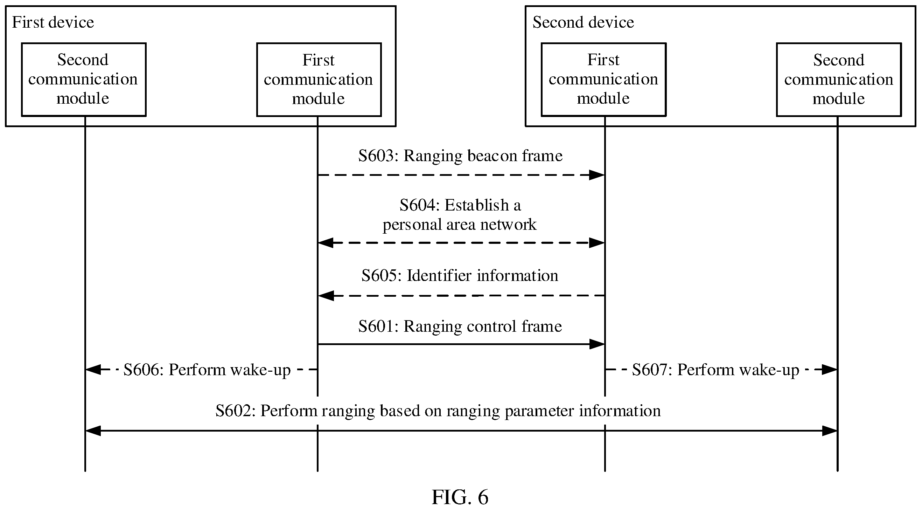

For example, refer to FIG. 6. S601: A first communication module of a first device sends a ranging control frame to a first communication module of a second device. Correspondingly, the first communication module of the second device receives the ranging control frame from the first communication module of the first device.

For specific implementations of the first resource and the first communication module, refer to the descriptions in FIG. 2. Details are not described herein again.

For example, the ranging control frame may include ranging parameter information.

For example, the ranging parameter information may be used to perform ranging.

Optionally, the ranging parameter information may be obtained through negotiation between the first device and the second device by using the first resource.

Optionally, the ranging parameter information may include but is not limited to one or more of the following: that the first device is a ranging initiator, and correspondingly, the second device is a ranging responder; that the second device is a ranging initiator, and correspondingly, the first device is a ranging responder; a first initiation moment; a first response moment; a first report moment; a second initiation moment; a second response moment; a second report moment; a first final moment; and a second final moment.

For an implementation of the ranging parameter information, refer to the descriptions in FIG. 2. Details are not described herein again.

Optionally, the first initiation moment may be a corresponding moment at which the first device sends a ranging initiation frame.

For example, refer to FIG. 4. The first initiation moment may be the moment corresponding to $I_1$ in the SS-TWR manner and the DS-TWR manner.

Optionally, the first response moment may be a corresponding moment at which the second device sends a ranging response frame.

For example, refer to FIG. 4. The first response moment may be the moment corresponding to $R_1$ in the OWR manner, the SS-TWR manner, and the DS-TWR manner.

Optionally, the first report moment may be a corresponding moment at which the second device sends a measurement report.

For example, refer to FIG. 4. The first report moment may be the moment corresponding to $MR_1$ in the SS-TWR manner and the DS-TWR manner.

Optionally, the second initiation moment may be a corresponding moment at which the second device sends a ranging initiation frame.

For example, refer to FIG. 4. The second initiation moment may be the moment corresponding to $I_2$ in the many-to-many scenario of the SS-TWR manner and the DS-TWR manner.

Optionally, the second response moment may be a corresponding moment at which the first device sends a ranging response frame.

For example, refer to FIG. 4. The second response moment may be the moment corresponding to $R_2$

in the many-to-many scenario of the SS-TWR manner and the DS-TWR manner.

Optionally, the second report moment may be a corresponding moment at which the first device sends a measurement report.

For example, refer to FIG. 4. The second response moment may be the moment corresponding to $MR_2$ in the many-to-many scenario of the SS-TWR manner and the DS-TWR manner.

Optionally, the first final moment may be a corresponding moment at which the first device sends a ranging final frame.

For example, refer to FIG. 4. The first final moment may be the moment corresponding to $F_1$ in the DS-TWR manner.

Optionally, the second final moment may be a corresponding moment at which the second device sends a ranging final frame.

For example, refer to FIG. 4. The second final moment may be the moment corresponding to $F_2$ in the DS-TWR manner.

Optionally, the ranging parameter information may further include ranging duration information. For details, refer to the foregoing descriptions. Details are not described herein again. The first device and the second device may perform ranging based on duration indicated by the ranging duration information.

In this way, the first device sends a ranging parameter to the second device by using the first resource with lower power consumption, to shorten time within which a second resource with higher power consumption is occupied. In this way, power consumption in the ranging procedure can be reduced.

In a possible design method, the method provided in an embodiment of this application may further include S503: The first device sends a ranging beacon frame to the second device by using the first resource. Correspondingly, the second device receives the ranging beacon frame from the first device by using the first resource.

For example, refer to FIG. 6. S603: The first communication module of the first device sends a ranging beacon frame to the first communication module of the second device. Correspondingly, the first communication module of the second device receives the ranging beacon frame from the first communication module of the first device.

Optionally, the ranging beacon frame may be used to request to establish a personal area network.

In other words, the first device initiates, by using the first resource, establishment of the personal area network.

Optionally, the ranging beacon frame may be further used for time synchronization between devices in the personal area network and/or broadcast of network parameter information. The network parameter information may indicate a parameter used for networking.

Optionally, ranging beacon frames may be periodically sent.

It should be noted that the establishment of the personal area network may be initiated by the second device. In FIG. 5, an example in which the first device initiates the establishment of the personal area network is used for description.

In a possible design method, the method provided in an embodiment of this application may further include S504: The second device and the first device establish the personal area network by using the first resource.

For example, refer to FIG. 6. S604: The first communication module of the first device and the first communication module of the second device establish the personal area network.

It should be noted that S503 and S504 may be performed before S501, and before ranging is initiated, the personal area network may be first established.

In this way, the first device and the second device establish the personal area network by using the first resource with the lower power consumption, to shorten the time within which the second resource with the higher power consumption is occupied. In this way, power consumption can be further reduced.

In a possible design method, the method provided in an embodiment of this application may further include S505: In response to that the second device establishes the personal area network with the first device by using the first resource, the second device sends identification information to the first device by using the first resource. Correspondingly, the first device receives the identification information from the second device by using the first resource.

For example, refer to FIG. 6. S605: The first communication module of the second device sends identification information to the first communication module of the first device. Correspondingly, the first communication module of the first device receives the identification information from the first communication module of the second device.

Optionally, the identification information may be used to identify the second device.

For example, the identification information may include an identifier of the second device and/or a media access control (medium access control, MAC) address of the second device.

In other words, after the first device and the second device establish the personal area network, the second device may send the identifier or the address of the second device to the first device by using the first resource, so that the first device may learn of the device included in the established personal area network.

Optionally, if the personal area network includes the first device, a second device 1, and a second device 2, the first device may send a ranging control frame to the second device 1 and the second device 2 through broadcast.

It should be noted that S505 may be performed before S501.

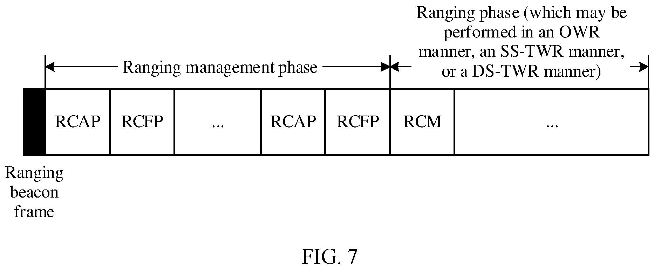

FIG. 7 is a diagram of another ranging procedure according to an embodiment of this application.

As shown in FIG. 7, before ranging is performed, a ranging beacon frame is sent, so that a personal area network may be established and a ranging parameter may be managed. In a ranging management phase, a ranging control access phase (ranging control access phase, RCAP) is contention time. During the RCAP, the first device and the second device may contend against each other for accessing the personal area network. A ranging control free phase (ranging control free phase, RCFP) is contention-free time. For example, based on a definition, the first device and the second device may interact during a first RCFP from the left in FIG. 7. In this case, a third device does not preempt this interval to send a signal. During the RCFP, devices in the personal area network may obtain a ranging parameter through negotiation by using the first resource, to obtain ranging parameter information.

Optionally, that the second device sends identification information to the first device by using the first resource may be performed during the RCFP.

In this way, the first device and the second device establish the personal area network by using the first resource with lower power consumption, obtain the ranging parameter information through negotiation by using the first resource, and transmit the ranging parameter information by using the first resource, to shorten time within which the second resource with higher power consumption is used for working. In this way, power consumption can be further reduced.

Ranging may be performed by using the second resource after the first device and the second device obtain the ranging parameter information by using the first resource. In this way, power consumption can be reduced without compromising ranging accuracy.

Optionally, refer to FIG. 6. The method provided in an embodiment of this application may further include S606 and S607. S606: After the first communication module of the first device sends the ranging control frame, the first communication module of the first device wakes up a second communication module of the first device. S607: When the first communication module of the second device receives the ranging control frame, the first communication module of the second device wakes up a second communication module of the second device.

In this way, the first device and the second device may perform ranging by using the second resource, to obtain an accurate ranging result. In addition, the first communication module performs all the following functions, such as establishing the personal area network, obtaining the ranging parameter information through negotiation, and transmitting the ranging parameter information. Based on this, the second communication module is used to perform ranging, and the second communication module does not need to establish the personal area network, obtain the ranging parameter information through negotiation, or the like. In this way, complexity of the ranging procedure can be reduced for the second communication module, and ranging efficiency is improved.

S502: The first device interacts with the second device based on the ranging parameter information by using the second resource, to perform ranging. Correspondingly, the second device interacts with the first device based on the ranging parameter information by using the second resource, to perform ranging.

For example, a bandwidth of the second resource is greater than a bandwidth of the first resource.

As shown in FIG. 6, in S602, the second communication module of the first device and the second communication module of the second device perform ranging based on the ranging parameter information.

For example, the first device and the second device may perform ranging by using the second resource in the OWR manner, the SS-TWR manner, the DS-TWR manner, or other ranging manners.

For example, refer to FIG. 4. The first device and the second device may perform the RIP phase, the RRP phase, the RFP phase, and/or the MRP phase by using the second resource, to obtain a distance between the first device and the second device.

In some embodiments, the first device and the second device may perform ranging by using the second resource in the OWR manner. S502 may include step 1 and step 2.

Step 1: The second device sends a first ranging response frame to the first device by using the second resource. Correspondingly, the first device receives the first ranging response frame from the second device by using the second resource.

Optionally, the first ranging response frame carries a timestamp, for example, a moment 1, corresponding to sending of the first ranging response frame by the second device. The first device receives the first ranging response frame, and adds, to the ranging response frame, a timestamp, for example, a moment 2, corresponding to receiving of the first ranging response frame.

Optionally, the ranging parameter information may include the first response moment.

Refer to FIG. 4. In the OWR manner, the second device may send the first ranging response frame to the first device at a first corresponding moment by using the second resource.

Step 2: The first device sends a measurement report to the second device by using the second resource. Correspondingly, the second device receives the measurement report from the first device by using the second resource.

Optionally, the measurement report may include the moment, for example, the moment 2, at which the first device receives the first ranging response frame from the second device.

Optionally, the second device may determine, based on the moment 1 and the moment 2, that time of flight taken by a signal to travel between the first device and the second device is T = the moment 2 - the moment 1, and determine that the distance between the first device and the second device is L = (the moment 2-the moment 1) × the speed of light.

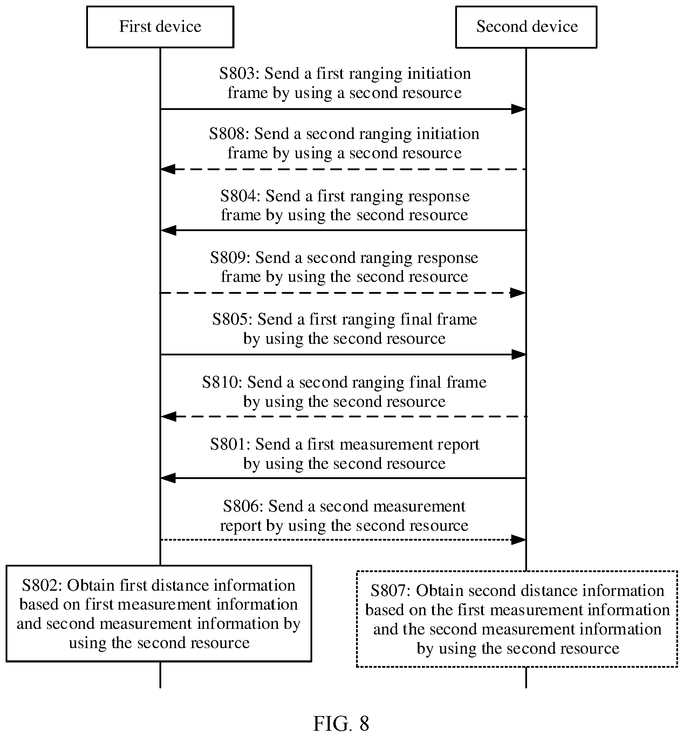

FIG. 8 shows another ranging method according to an embodiment of this application. The following describes, with reference to the method shown in FIG. 8, that the first device and the second device perform ranging by using the second resource in the SS-TWR manner or the DS-TWR manner.

In some other embodiments, when the ranging parameter information includes that the first device is the ranging initiator and the second device is the ranging responder, S502 may include S801 and S802.

S801: The second device sends a first measurement report to the first device by using the second resource. Correspondingly, the first device receives the first measurement report from the second device by using the second resource.

For example, the second communication module of the second device may send the first measurement report to the second communication module of the first device. Correspondingly, the second communication module of the first device receives the first measurement report from the second communication module of the second device.

Optionally, the first measurement report may include first measurement information.

Optionally, the first measurement information may indicate a time interval between time at which the second device receives a first ranging initiation frame from the first device and time at which the second device sends a first ranging response frame to the first device.

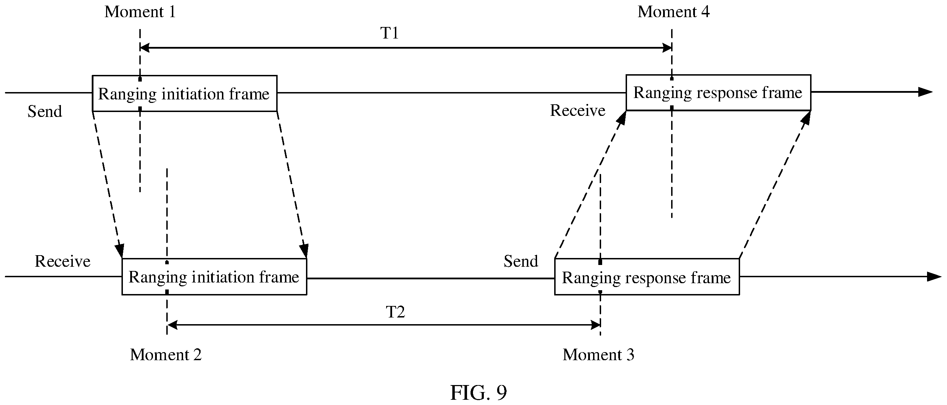

FIG. 9 is an application diagram of a ranging method according to an embodiment of this application.

Refer to FIG. 9. The first measurement information may indicate a T2 time interval.

Optionally, the ranging parameter information may include the first report moment.

Optionally, S801 may include: The second device sends the first measurement report to the first device at the first report moment by using the second resource.

It is assumed that the personal area network includes the second device, a first device 1, and a first device 2. The second device may send the first ranging initiation frame to the first device 1 and the first device 2 at the first report moment by using the second resource.

S802: The first device obtains first distance information based on the first measurement information and second measurement information by using the second resource.

For example, the second communication module of the first device obtains the first distance information based on the first measurement information and the second measurement information.

Optionally, the second measurement information may indicate a time interval between time at which the first device sends the first ranging initiation frame and time at which the first device receives the first ranging response frame.

Optionally, the first distance information may include a distance between the first device and the second device.

Refer to FIG. 9. The second measurement information may indicate a T1 time interval.

For example, the first device may determine that time of flight taken by a signal to travel between the first device and the second device is

$$T = \frac{T1 - T2}{2}$$

. The first device may obtain a distance L between the first device and the second device according to a formula

$$L = \frac{T1 - T2}{2} \times v_{\text{light}}$$

, where T1 is the time interval indicated by the second measurement information, T2 is the time interval indicated by the first measurement information, and $v_{\text{light}}$ is the speed of light. In this way, the first device and the second device may complete ranging in the SS-TWR manner.

In some embodiments, S802 may include: The first device obtains the first distance information based on the first measurement information, the second measurement information, third measurement information, and fourth measurement information by using the second resource.

Optionally, the first measurement report may further include the third measurement information.

Optionally, the third measurement information may indicate a time interval between the time at which the second device sends the first ranging response frame and time at which the second device receives a first ranging final frame from the first device.

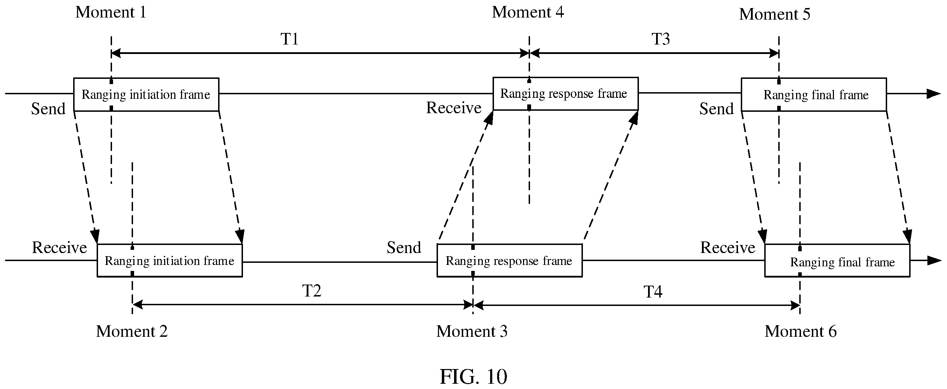

FIG. 10 is an application diagram of a ranging method according to an embodiment of this application.

Refer to FIG. 10. The third measurement information may indicate a T4 time interval.

Optionally, the first ranging final frame may be sent by the first device after the first device receives the first ranging response frame.

Optionally, the fourth measurement information may indicate a time interval between the time at which the first device receives the first ranging response frame and time at which the first device sends the first ranging final frame.

Refer to FIG. 10. The fourth measurement information may indicate a T3 time interval.

For example, the first device may determine that time of flight taken by a signal to travel between the first device and the second device is

$$T = \frac{T1 \times T3 - T2 \times T4}{T1 + T2 + T3 + T4}$$

. The first device may obtain the distance L between the first device and the second device according to a formula

$$L = \frac{T1 \times T3 - T2 \times T4}{T1 + T2 + T3 + T4} \times v_{\text{light}}$$

, where T1 is the time interval indicated by the second measurement information, T2 is the time interval indicated by the first measurement information, T3 is the time interval indicated by the fourth measurement information, T4 is the time interval indicated by the third measurement information, and $v_{\text{light}}$ is the speed of light.

In this way, the first device and the second device may complete ranging in the DS-TWR manner.

In some embodiments, S502 may further include S803 and S804.

S803: The first device sends the first ranging initiation frame to the second device by using the second resource. Correspondingly, the second device receives the first ranging initiation frame from the first device by using the second resource.

For example, the second communication module of the first device sends the first ranging initiation frame to the second communication module of the second device. Correspondingly, the second communication module of the second device receives the first ranging initiation frame from the second communication module of the first device.

Optionally, the ranging parameter information may include the first initiation moment.

Optionally, S803 may include: The first device sends the first ranging initiation frame to the second device at the first initiation moment by using the second resource.

It is assumed that the personal area network includes the first device, the second device 1, and the second device 2. The first device may send, through broadcast, the first ranging initiation frame to the second device 1 and the second device 2 at the first initiation moment by using the second resource.

Optionally, the first device may add, to the first ranging initiation frame, a timestamp corresponding to sending of the first ranging initiation frame. The second device may receive the first ranging initiation frame, and add, to the first ranging initiation frame, a timestamp corresponding to receiving of the first ranging initiation frame.

S804: The second device sends a first ranging response frame to the first device by using the second resource. Correspondingly, the first device receives the first ranging response frame from the second device by using the second resource.

For example, the second communication module of the second device sends the first ranging response frame to the second communication module of the first device. Correspondingly, the second communication module of the first device receives the first ranging response frame from the second communication module of the second device.

Optionally, the ranging parameter information may include the first response moment.

Optionally, S804 may include: The second device sends the first ranging response frame to the first device at the first response moment by using the second resource.

Optionally, the second device may add, to the first ranging response frame, a timestamp corresponding to sending of the first ranging response frame. The first device may receive the first ranging response frame, and add, to the first ranging response frame, a timestamp corresponding to receiving of the first ranging response frame.

In some embodiments, S502 may further include S805. S805: The first device sends a first ranging final frame to the second device by using the second resource. Correspondingly, the second device receives the first ranging final frame from the first device by using the second resource.

For example, the second communication module of the first device sends the first ranging final frame to the second communication module of the second device. Correspondingly, the second communication module of the second device receives the first ranging final frame from the second communication module of the first device.

Optionally, the ranging parameter information may include the first final moment.

Optionally, S805 may include: The first device sends the first ranging final frame to the second device at the first initiation moment by using the second resource.

It is assumed that the personal area network includes the first device, the second device 1, and the second device 2. The first device may send the first ranging final frame to the second device 1 and the second device 2 at the first final moment by using the second resource.

Optionally, the first device may add, to the first ranging final frame, a timestamp corresponding to sending of the first ranging final frame. The second device may receive the first ranging final frame, and add, to the first ranging final frame, a timestamp corresponding to receiving of the first ranging final frame.

It should be noted that when the method provided in an embodiment of this application is applied to the one-to-many scenario shown in FIG. 4, specific implementations of S502 may include S801 to S804, and may further include S805. Alternatively, specific implementations of S502 may include the following S806 to S809, and may further include S810. When the method provided in an embodiment of this application is applied to the many-to-many scenario shown in FIG. 4, specific implementations of S502 may include S801 to S804 and the following S806 to S809, and may further include S805 and/or S810.

In a possible design method, when the ranging parameter information includes that the second device is the ranging initiator and the first device is the ranging responder, S502 may include S806 and S807.

S806: The first device sends a second measurement report to the second device by using the second resource. Correspondingly, the second device receives the second measurement report from the first device by using the second resource.

For example, the second communication module of the first device may send the second measurement report to the second communication module of the second device. Correspondingly, the second communication module of the second device receives the second measurement report from the second communication module of the first device.

Optionally, the second measurement report may include fifth measurement information.

Optionally, the fifth measurement information may indicate a time interval between time at which the first device receives a second ranging initiation frame from the second device and time at which the first device sends a second ranging response frame to the second device.

Refer to FIG. 9. The fifth measurement information may indicate the T2 time interval.

Optionally, the ranging parameter information may include the second report moment.

Optionally, S806 may include: The first device sends the second measurement report to the second device at the second report moment by using the second resource.

It is assumed that the personal area network includes the first device, the second device 1, and the second device 2. The first device may send the second measurement report to the second device 1 and the second device 2 at the second report moment by using the second resource.

S807: The second device obtains second distance information based on the fifth measurement information and sixth measurement information by using the second resource.

For example, the second communication module of the first device obtains the first distance information based on the first measurement information and the second measurement information.

Optionally, the sixth measurement information may indicate a time interval between time at which the second device sends the second ranging initiation frame and time at which the second device receives the second ranging response frame.

Refer to FIG. 9. The sixth measurement information may indicate the T1 time interval.

Optionally, the second distance information may include the distance between the first device and the second device.

For a specific example of S807, refer to the corresponding example in S802. Details are not described herein again.

In some embodiments, S807 may include: The second device obtains the second distance information based on the fifth measurement information, the sixth measurement information, seventh measurement information, and eighth measurement information by using the second resource.

Optionally, the second measurement report may further include the seventh measurement information.

Optionally, the seventh measurement information may indicate a time interval between the time at which the first device sends the second ranging response frame and time at which the first device receives a second ranging final frame from the second device.

Refer to FIG. 10. The seventh measurement information may indicate the T4 time interval.

Optionally, the second ranging final frame may be sent by the second device after the second device receives the second ranging response frame.

Optionally, the eighth measurement information may indicate a time interval between the time at which the second device receives the second ranging response frame and time at which the second device sends the second ranging final frame.

Refer to FIG. 10. The fourth measurement information may indicate the T3 time interval.

A specific example in which the second device obtains the second distance information based on the fifth measurement information, the sixth measurement information, the seventh measurement information, and the eighth measurement information by using the second resource is similar to the corresponding example of S802 in which the first device obtains the first distance information based on the first measurement information, the second measurement information, the third measurement information, and the fourth measurement information by using the second resource. Details are not described herein again.

In some embodiments, S502 may further include S808 and S809.

S808: The second device sends the second ranging initiation frame to the first device by using the second resource. Correspondingly, the first device receives the second ranging initiation frame from the second device by using the second resource.

Optionally, the ranging parameter information may include the second initiation moment.

S809: The first device sends the first ranging response frame to the second device by using the second resource. Correspondingly, the second device receives the first ranging response frame from the first device by using the second resource.

In some embodiments, S502 may further include S810. In S810: The second device sends the second ranging final frame to the first device by using the second resource. Correspondingly, the first device receives the second ranging final frame from the second device by using the second resource.

Optionally, the ranging parameter information may include the second final moment.

Specific implementations of S808 to S810 are similar to those of S803 to S805. Details are not described herein again.

In a possible design method, the method provided in an embodiment of this application may further include: The first device sends the first distance information to the second device by using the first resource. Correspondingly, the second device receives the first distance information from the first device by using the first resource.

For example, the first communication module of the first device may send the first distance information to the first communication module of the second device.

In other words, the first device can send the first distance information to the second device by using the first resource with lower power consumption. In this way, power consumption can be further reduced.

Optionally, the second communication module of the first device may send the first distance information to the first communication module of the first device. In other words, after obtaining the first distance information, the second communication module of the first device may send the first distance information to the first communication module of the first device, and the first communication module of the first device sends the first distance information to the first communication module of the second device. In this way, power consumption is further reduced.

It should be noted that when there are a plurality of second devices, the first device may broadcast measurement results to the plurality of second devices in time intervals in a non-conflicting manner.

In a possible design method, the method provided in an embodiment of this application may further include: The second device sends the second distance information to the first device by using the first resource. Correspondingly, the first device receives the second distance information from the second device by using the first resource.

For example, the first communication module of the second device may send the second distance information to the first communication module of the first device.

In other words, the second device can send the second distance information to the first device by using the first resource with the lower power consumption. In this way, power consumption can be further reduced.

Optionally, the second communication module of the second device may send the second distance information to the first communication module of the second device.

In other words, after obtaining the second distance information, the second communication module of the second device may send the second distance information to the first communication module of the second device, and the first communication module of the second device sends the second distance information to the first communication module of the first device. In this way, power consumption is further reduced.

Based on the ranging method provided in embodiments of this application, the first device sends the ranging control frame to the second device by using the first resource with a lower bandwidth. The ranging control frame includes the ranging parameter information. The first device and the second device perform ranging based on the ranging parameter information by using the second resource. In this way, some actions in the ranging procedure are performed by using the first resource with the lower bandwidth, to shorten time within which the second resource with a higher bandwidth is occupied. In this way, power consumption in the ranging procedure can be reduced.

In addition, ranging is performed by using the second resource after the first device interacts with the second device based on the ranging parameter information by using the first resource, so that power consumption can be reduced without compromising ranging accuracy.

In this application, unless otherwise specified, for identical or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

An embodiment of this application provides a communication system. The system includes one or more first devices and one or more second devices.

An embodiment of this application provides a computer-readable storage medium. The computer-readable storage medium includes a computer program or instructions. When the computer program or the instructions are run on a computer, the computer is enabled to perform the ranging method according to the foregoing method embodiments.

An embodiment of this application provides a computer program product, including a computer program or instructions. When the computer program or the instructions are run on a computer, the computer is enabled to perform the ranging method according to the foregoing method embodiments.

An embodiment of this application provides a communication system. The communication system includes one or more first devices and one or more second devices.

The first device is configured to perform an action of the first device in the foregoing method embodiments. For a specific execution method and procedure, refer to the foregoing method embodiments. Details are not described herein again.

The second device is configured to perform an action of the second device in the foregoing method embodiments. For a specific execution method and procedure, refer to the foregoing method embodiments. Details are not described herein again.

An embodiment of this application provides a chip system. The chip system includes a logic circuit and an input/output port. The logic circuit may be configured to implement a processing function in the method provided in embodiments of this application, and the input/output port may be configured to implement receiving and sending functions in the method provided in embodiments of this application.

For example, the input port may be configured to implement the receiving function related to the method provided in embodiments of this application, and the output port may be configured to implement the sending function related to the method provided in embodiments of this application.

In a possible design, the chip system further includes a memory, and the memory is configured to store program instructions and data for implementing the functions in the method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the method provided in an embodiment of this application is performed.

An embodiment of this application provides a computer program product. The computer program product includes a computer program or instructions. When the computer program or the instructions are run on a computer, the method provided in an embodiment of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, including one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between associated objects, but may also indicate an "and/or" relationship. For details, refer to the context for understanding.

In this application, at least one means one or more, and a plurality of means two or more. "At least one of the following items (pieces)" or a similar expression thereof refers to any combination of these items (pieces), including any combination of a single item (piece) or a plurality of the items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

If no conflict is caused, any content in any two or more embodiments of this application may be freely combined, and a combined technical solution also falls within the scope of this application.

A person skilled in the art may clearly learn that, for the purpose of convenient and brief description, for a specific working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A ranging method, comprising:

   sending, by a first device, a ranging control frame to a second device by using a first resource, wherein the ranging control frame comprises ranging parameter information, and the ranging parameter information is used to perform ranging; and
   interacting with, by the first device, the second device based on the ranging parameter information by using a second resource, to perform ranging, wherein a bandwidth of the second resource is greater than a bandwidth of the first resource.

2. The ranging method according to claim 1, wherein the method further comprises:
sending, by the first device, a ranging beacon frame to the second device by using the first resource, wherein the ranging beacon frame is used to request to establish a personal area network.

3. The ranging method according to claim 2, wherein the method further comprises:
establishing, by the first device, the personal area network with the second device by using the first resource.

4. The ranging method according to claim 3, wherein the method further comprises:
receiving, by the first device, identification information from the second device by using the first resource, wherein the identification information is used to identify the second device.

5. The ranging method according to any one of claims 1 to 4, wherein when the ranging parameter information comprises that the first device is a ranging initiator and the second device is a ranging responder, the interacting with, by the first device, the second device based on the ranging parameter information by using a second resource, to perform ranging comprises:

receiving, by the first device, a first measurement report from the second device by using the second resource, wherein the first measurement report comprises first measurement information, and the first measurement information indicates a time interval between time at which the second device receives a first ranging initiation frame from the first device and time at which the second device sends a first ranging response frame to the first device; and
obtaining, by the first device, first distance information based on the first measurement information and second measurement information by using the second resource, wherein the second measurement information indicates a time interval between time at which the first device sends the first ranging initiation frame and time at which the first device receives the first ranging response frame, and the first distance information comprises a distance between the first device and the second device.

6. The ranging method according to claim 5, wherein the first measurement report further comprises third measurement information, the third measurement information indicates a time interval between the time at which the second device sends the first ranging response frame and time at which the second device receives a first ranging final frame from the first device, and the first ranging final frame is sent by the first device after the first device receives the first ranging response frame.

7. The ranging method according to claim 6, wherein the obtaining, by the first device, first distance information based on the first measurement information and second measurement information by using the second resource comprises:
obtaining, by the first device, the first distance information based on the first measurement information, the second measurement information, the third measurement information, and fourth measurement information by using the second resource, wherein the fourth measurement information indicates a time interval between the time at which the first device receives the first ranging response frame and time at which the first device sends the first ranging final frame.

8. The ranging method according to any one of claims 5 to 7, wherein the method further comprises:
sending, by the first device, the first distance information to the second device by using the first resource.

9. The ranging method according to any one of claims 1 to 8, wherein when the ranging parameter information comprises that the second device is the ranging initiator and the first device is the ranging responder, the interacting with, by the first device, the second device based on the ranging parameter information by using a second resource, to perform ranging comprises:
sending, by the first device, a second measurement report to the second device by using the second resource, wherein the second measurement report comprises fifth measurement information, and the fifth measurement information indicates a time interval between time at which the first device receives a second ranging initiation frame from the second device and time at which the first device sends a second ranging response frame to the second device.

10. The ranging method according to claim 9, wherein the second measurement report further comprises seventh measurement information, and the seventh measurement information indicates a time interval between the time at which the first device sends the second ranging response frame and time at which the first device receives a second ranging final frame from the second device.

11. The ranging method according to claim 9 or 10, wherein the method further comprises:
receiving, by the first device, second distance information from the second device by using the first resource, wherein the second distance information comprises the distance between the first device and the second device.

12. A ranging method, comprising:

receiving, by a second device, a ranging control frame from a first device by using a first resource, wherein the ranging control frame comprises ranging parameter information, and the ranging parameter information is used to perform ranging; and
interacting with, by the second device, the first device based on the ranging parameter information by using a second resource, to perform ranging, wherein a bandwidth of the second resource is greater than a bandwidth of the first resource.

13. The ranging method according to claim 12, wherein the method further comprises:
receiving, by the second device, a ranging beacon frame from the first device by using the first resource, wherein the ranging beacon frame is used to request to establish a personal area network.

14. The ranging method according to claim 13, wherein the method further comprises:
establishing, by the second device, the personal area network with the first device by using the first resource.

15. The ranging method according to claim 14, wherein the method further comprises:
in response to the establishing, by the second device, the personal area network with the first device by using the first resource, sending, by the second device, identification information to the first device by using the first resource, wherein the identification information is used to identify the second device.

16. The ranging method according to any one of claims 12 to 15, wherein when the ranging parameter information comprises that the first device is a ranging initiator and the second device is a ranging responder, the interacting with, by the second device, the first device based on the ranging parameter information by using a second resource, to perform ranging comprises:
sending, by the second device, a first measurement report to the first device by using the second resource, wherein the first measurement report comprises first measurement information, and the first measurement information indicates a time interval between time at which the second device receives a first ranging initiation frame from the first device and time at which the second device sends a first ranging response frame to the first device.

17. The ranging method according to claim 16, wherein the first measurement report further comprises third measurement information, the third measurement information indicates a time interval between the time at which the second device sends the first ranging response frame and time at which the second device receives a first ranging final frame from the first device.

18. The ranging method according to any one of claims 15 to 17, wherein the method further comprises:
receiving, by the second device, first distance information from the first device by using the first resource, wherein the first distance information comprises a distance between the first device and the second device.

19. The ranging method according to any one of claims 12 to 18, wherein when the ranging parameter information comprises that the second device is the ranging initiator and the first device is the ranging responder, the interacting with, by the second device, the first device based on the ranging parameter information by using a second resource, to perform ranging further comprises:

receiving, by the second device, a second measurement report from the first device by using the second resource, wherein the second measurement report comprises fifth measurement information, and the fifth measurement information indicates a time interval between time at which the first device receives a second ranging initiation frame from the second device and time at which the first device sends a second ranging response frame to the second device; and
obtaining, by the second device, second distance information based on the fifth measurement information and sixth measurement information by using the second resource, wherein the sixth measurement information indicates a time interval between time at which the second device sends the second ranging initiation frame and time at which the second device receives the second ranging response frame, and the second distance information comprises the distance between the first device and the second device.

20. The ranging method according to claim 19, wherein the second measurement report further comprises seventh measurement information, and the seventh measurement information indicates a time interval between the time at which the first device sends the second ranging response frame and time at which the first device receives a second ranging final frame from the second device.

**21.** The ranging method according to claim 20, wherein the obtaining, by the second device, second distance information based on the fifth measurement information and sixth measurement information by using the second resource comprises:
obtaining, by the second device, the second distance information based on the fifth measurement information, the sixth measurement information, the seventh measurement information, and eighth measurement information by using the second resource, wherein the eighth measurement information indicates a time interval between the time at which the second device receives the second ranging response frame and time at which the second device sends the second ranging final frame.

**22.** The ranging method according to any one of claims 19 to 21, wherein the method further comprises:
sending, by the second device, the second distance information to the first device by using the first resource.

**23.** A communication apparatus, wherein the communication apparatus comprises a first communication module and a second communication module, and the first communication module is configured to wake up the second communication module;

the first communication module is configured to perform, by using a first resource, the method performed by using the first resource according to any one of claims 1 to 22; and
the second communication module is configured to perform, by using a second resource, the method performed by using the second resource according to any one of claims 1 to 22, wherein a bandwidth of the first resource is less than a bandwidth of the second resource.

**24.** A communication apparatus, wherein the communication apparatus comprises a processor, configured to perform method according to any one of claims 1 to 22.

**25.** A computer-readable storage medium, wherein the computer-readable storage medium stores a computer program or instructions, and when the computer program or the instructions are run on a computer, the method according to any one of claims 1 to 22 is performed.

**26.** A computer program product, wherein the computer program product comprises a computer program or instructions, and when the computer program or the instructions are run on a computer, the method according to any one of claims 1 to 22 is performed.

First device          Second device

FIG. 1

Communication apparatus 200

First communication module — 201

Second communication module

202

FIG. 2

Communication apparatus 300

Processor — 301

CPU 0

CPU 1

Processor — 304

CPU 2

CPU 3

Memory — 302

Transceiver — 303

FIG. 3

OWR

| RCM | | R₁ | | R₂ | | ... | | R_N | | MR | | RCUM | |

RCP — RRP — MRP — RCUP

SS-TWR: one-to-many

| RCM | | I₁ | | R₁ | | R₂ | | ... | | R_N | | MR₁ | | RCUM | |

RCP — RIP — RRP — MRP — RCUP

SS-TWR: one-to-many, an RCP is combined with an RIP

| RCM&I₁ | | R₁ | | R₂ | | ... | | R_N | | MR₁ | | RCUM | |

RCP/RIP — RRP — MRP — RCUP

DS-TWR: one-to-many

| RCM | | I₁ | | R₁ | | R₂ | | ... | | R_N | | F₁ | | MR₁ | | MR₂ | | ... | | MR_N | | RCUM | |

RCP — RIP — RRP — RFP — MRP — RCUP

SS-TWR: many-to-many

| RCM | | I₁ | | I₂ | | ... | | I_M | | R₁ | | R₂ | | ... | | R_N | |

RCP — RIP — RRP

Continue to the line below

Continue from the line above

SS-TWR: many-to-many

| MR₁ | | MR₂ | | ... | | MR_M | | RCUM | |

MRP — RCUP

DS-TWR: many-to-many

| RCM | | I₁ | | I₂ | | ... | | I_M | | R₁ | | R₂ | | ... | | R_N | |

RCP — RIP — RRP

Continue to the line below

Continue from the line above

DS-TWR: many-to-many

| F₁ | | F₂ | | ... | | F_M | | MR₁ | | MR₂ | | ... | | MR_N | | RCUM | |

RFP — MRP — RCUP

FIG. 4

24

First device | Second device

S503: Send a ranging beacon
frame by using a first resource

S504: Establish a personal area
network by using the first resource

S505: Send identification
information by using the first
resource

S501: Send a ranging control
frame by using the first resource

S502: Based on ranging parameter information,
perform ranging by using a second resource

FIG. 5

First device
Second device

| Second communication module | First communication module | | First communication module | Second communication module |

S603: Ranging beacon frame

S604: Establish a personal area network

S605: Identifier information

S601: Ranging control frame

S606: Perform wake-up          S607: Perform wake-up

S602: Perform ranging based on ranging parameter information

FIG. 6

FIG. 7

```
┌─────────────┐                              ┌──────────────┐
│ First device│                              │ Second device│
└──────┬──────┘                              └──────┬───────┘
       │  S803: Send a first ranging initiation     │
       │     frame by using a second resource       │
       ├───────────────────────────────────────────►│
       │  S808: Send a second ranging initiation    │
       │     frame by using a second resource       │
       │◄ ─ ─ ─ ─ ─ ─ ─ ─ ─ ─ ─ ─ ─ ─ ─ ─ ─ ─ ─ ─ ─┤
       │  S804: Send a first ranging response       │
       │     frame by using the second resource     │
       │◄───────────────────────────────────────────┤
       │  S809: Send a second ranging response      │
       │     frame by using the second resource     │
       ├ ─ ─ ─ ─ ─ ─ ─ ─ ─ ─ ─ ─ ─ ─ ─ ─ ─ ─ ─ ─ ─►│
       │  S805: Send a first ranging final frame     │
       │       by using the second resource         │
       ├───────────────────────────────────────────►│
       │  S810: Send a second ranging final frame   │
       │       by using the second resource         │
       │◄ ─ ─ ─ ─ ─ ─ ─ ─ ─ ─ ─ ─ ─ ─ ─ ─ ─ ─ ─ ─ ─┤
       │  S801: Send a first measurement report     │
       │       by using the second resource         │
       │◄───────────────────────────────────────────┤
       │  S806: Send a second measurement           │
       │   report by using the second resource      │
       ├ ─ ─ ─ ─ ─ ─ ─ ─ ─ ─ ─ ─ ─ ─ ─ ─ ─ ─ ─ ─ ─►│
┌──────┴─────────────────────────┐  ┌ ─ ─ ─┴ ─ ─ ─ ─ ─ ─ ─ ─ ─ ─ ─ ─ ─ ┐
│ S802: Obtain first distance    │    S807: Obtain second distance
│ information based on first      │  │ information based on the first    │
│ measurement information and     │    measurement information and
│ second measurement information  │  │ the second measurement            │
│ by using the second resource   │    information by using the second │
└──────┬─────────────────────────┘  │    resource                       │
       │                             └ ─ ─ ─┬ ─ ─ ─ ─ ─ ─ ─ ─ ─ ─ ─ ─ ─ ─┘
```

FIG. 8

FIG. 9

EP 4 475 586 A1

FIG. 10

EP 4 475 586 A1

| | |
|---|---|
| **INTERNATIONAL SEARCH REPORT** | International application No.<br>**PCT/CN2023/083175** |

| | |
|---|---|
| **A.** | **CLASSIFICATION OF SUBJECT MATTER** |
| | H04W24/08(2009.01)i; G01S11/02(2010.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W,G01S

Documentation searched other than minimum documentation to the extent that such documents are included in the fields searched

Electronic data base consulted during the international search (name of data base and, where practicable, search terms used)

CNABS, CNTXT, VEN, CNKI: 测距, 距离, 测量, 带宽, 功耗, 不同, 大于, 小于, 降低, 超宽带, UWB, distance, range, BW, BandWith, power dissipation, power consumption

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 112055982 A (BEIJING XIAOMI MOBILE SOFTWARE CO., LTD.) 08 December 2020 (2020-12-08)<br>    description, paragraphs [0005]-[0025] and [0051]-[0226] | 1-26 |
| A | CN 107251621 A (QUALCOMM INC.) 13 October 2017 (2017-10-13)<br>    entire document | 1-26 |
| A | CN 111278030 A (OPPO GUANGDONG MOBILE TELECOMMUNICATIONS CO., LTD.)<br>12 June 2020 (2020-06-12)<br>    entire document | 1-26 |
| A | EP 1801612 A1 (ESSENSIUM) 27 June 2007 (2007-06-27)<br>    entire document | 1-26 |
| A | US 2008291090 A1 (VANDENAMEELE, P.) 27 November 2008 (2008-11-27)<br>    entire document | 1-26 |
| A | US 2022082676 A1 (SAMSUNG ELECTRONICS CO., LTD.) 17 March 2022 (2022-03-17)<br>    entire document | 1-26 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2023** | **04 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/083175**

| Patent document cited in search report | | | Publication date (day/month/year) | Patent family member(s) | | | Publication date (day/month/year) |
|---|---|---|---|---|---|---|---|
| CN | 112055982 | A | 08 December 2020 | None | | | |
| CN | 107251621 | A | 13 October 2017 | WO | 2016130893 | A1 | 18 August 2016 |
| | | | | CA | 2973001 | A1 | 18 August 2016 |
| | | | | EP | 3257305 | A1 | 20 December 2017 |
| | | | | EP | 3257305 | B1 | 27 June 2018 |
| | | | | ES | 2688451 | T3 | 02 November 2018 |
| | | | | KR | 20170118064 | A | 24 October 2017 |
| | | | | KR | 101900909 | B1 | 21 September 2018 |
| | | | | JP | 2018506922 | A | 08 March 2018 |
| | | | | JP | 6445174 | B2 | 26 December 2018 |
| | | | | BR | 112017017353 | A2 | 10 April 2018 |
| | | | | US | 2016242056 | A1 | 18 August 2016 |
| | | | | US | 9949156 | B2 | 17 April 2018 |
| CN | 111278030 | A | 12 June 2020 | US | 2020367243 | A1 | 19 November 2020 |
| | | | | US | 11503596 | B2 | 15 November 2022 |
| | | | | WO | 2019028808 | A1 | 14 February 2019 |
| | | | | ZA | 202000765 | B | 25 August 2021 |
| | | | | IL | 272506 | A | 31 March 2020 |
| | | | | SG | 11202000995 | TA | 30 March 2020 |
| | | | | RU | 2745777 | C1 | 31 March 2021 |
| | | | | AU | 2017427055 | A1 | 27 February 2020 |
| | | | | PH | 12020500272 | A1 | 21 September 2020 |
| | | | | BR | 112020002468 | A2 | 28 July 2020 |
| | | | | EP | 3668148 | A1 | 17 June 2020 |
| | | | | EP | 3668148 | A4 | 12 August 2020 |
| | | | | EP | 3668148 | B1 | 21 December 2022 |
| | | | | CA | 3072138 | A1 | 14 February 2019 |
| | | | | CA | 3072138 | C | 07 March 2023 |
| | | | | JP | 2020534720 | A | 26 November 2020 |
| | | | | JP | 7089579 | B2 | 22 June 2022 |
| | | | | KR | 20200035036 | A | 01 April 2020 |
| | | | | KR | 102393633 | B1 | 02 May 2022 |
| | | | | MX | 2020001204 | A | 20 March 2020 |
| EP | 1801612 | A1 | 27 June 2007 | DE | 602006011652 | D1 | 25 February 2010 |
| | | | | EP | 1963882 | A1 | 03 September 2008 |
| | | | | EP | 1963882 | B1 | 06 January 2010 |
| | | | | AT | 454638 | T | 15 January 2010 |
| | | | | WO | 2007071748 | A1 | 28 June 2007 |
| | | | | US | 2008291090 | A1 | 27 November 2008 |
| | | | | US | 8199054 | B2 | 12 June 2012 |
| US | 2008291090 | A1 | 27 November 2008 | None | | | |
| US | 2022082676 | A1 | 17 March 2022 | WO | 2020145526 | A1 | 16 July 2020 |
| | | | | KR | 20210102273 | A | 19 August 2021 |
| | | | | EP | 3901660 | A1 | 27 October 2021 |
| | | | | EP | 3901660 | A4 | 23 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210301507

- CN 202210727259